(19) Europäisches Patentamt
European Patent Office
Office européen des brevets

(11) **EP 1 058 098 B1**

(12) **FASCICULE DE BREVET EUROPEEN**

(45) Date de publication et mention
de la délivrance du brevet:
**10.03.2010 Bulletin 2010/10**

(51) Int Cl.:
***G01F 23/00*** *(2006.01)* ***G01F 9/02*** *(2006.01)*

(21) Numéro de dépôt: **00401447.8**

(22) Date de dépôt: **24.05.2000**

(54) **Système d'estimation de la quantité de carburant restant dans le réservoir d'un véhicule automobile**

System zur Abschätzung der in einem Kraftstoffbehälter eines Kraftfahrzeuges enthaltenen Kraftstoffmenge

System for estimating the quantity of fuel contained in an automobile fuel tank

(84) Etats contractants désignés:
**AT BE CH CY DE DK ES FI FR GB GR IE IT LI LU MC NL PT SE**

(30) Priorité: **03.06.1999 FR 9907013**

(43) Date de publication de la demande:
**06.12.2000 Bulletin 2000/49**

(73) Titulaire: **Peugeot Citroën Automobiles SA 92200 Neuilly sur Seine (FR)**

(72) Inventeur: **Chandebois, Michel 93420 Villepinte (FR)**

(74) Mandataire: **Ménès, Catherine et al
Peugeot Citroën Automobiles SA
DRIA/PPIQ/BLE
18, rue des Fauvelles
92250 La Garenne Colombes (FR)**

(56) Documents cités:
**DE-A- 19 720 125    GB-A- 2 124 390
GB-A- 2 181 873    US-A- 4 437 162**

Printed by Jouve, 75001 PARIS (FR)

## Description

La présente invention concerne un système d'estimation de la quantité de carburant restant dans le réservoir d'un véhicule automobile.

Plus particulièrement, l'invention se rapporte à un tel système qui comporte une jauge de carburant adaptée pour délivrer des informations brutes de niveau de carburant et des moyens de filtrage de celles-ci.

La sortie de ces moyens de filtrage est alors reliée à des moyens d'affichage ou d'indication de la quantité de carburant estimée à un utilisateur du véhicule.

Ces moyens de filtrage ont été développés pour éviter que l'information délivrée à l'utilisateur ne change en permanence en fonction des conditions de roulage du véhicule.

On pourra par exemple se reporter aux documents GB-A- 2 124 390 et DE 197 20 125 qui illustrent des systèmes d'estimation de ce type. En particulier, le premier document mentionné ci-dessus décrit un système conforme au préambule de la revendication 1.

Cependant, les moyens de filtrage utilisés présentent encore un certain nombre d'inconvénients, car la quantité indiquée peut encore varier en fonction du déplacement du véhicule, alors que la prise en compte d'un apport en carburant dans le réservoir ne s'effectue que très lentement.

De plus, de tels moyens de filtrage peuvent provoquer des allumages intempestifs d'un témoin d'alerte de niveau bas de carburant dans le réservoir lorsque le véhicule roule.

Le but de l'invention est donc de résoudre ces problèmes.

A cet effet, l'invention a pour objet un système d'estimation de la quantité de carburant restant dans le réservoir d'un véhicule automobile, du type comportant une jauge de carburant adaptée pour délivrer des informations brutes de niveau de carburant, des moyens de filtrage de celles-ci, et des moyens de mesure de la consommation instantanée en carburant du moteur du véhicule, **caractérisé en ce que** les moyens de filtrage sont adaptés pour filtrer de manière itérative les informations brutes de niveau selon la relation :

$$N\_F(n) = \frac{(K1-1)}{K1} \times N\_F(n-1) + \frac{1}{K1} \times N\_B(n)$$

où :

N_F(n) représente le niveau filtré à l'instant n,
N_F(n-1) représente le niveau filtré à l'instant n-1,
N_B(n) représente le niveau mesuré par la jauge, et
K1 est une constante,

et en ce qu'il comporte des moyens adaptés pour l'estimation de manière itérative de la quantité de carburant, selon la relation :

$$N\_A(n) = N\_A(n-1) - K \times Co(n) \times \frac{N\_A(n-1)}{[1/2 + N\_F(n)]}$$

où:

Co(n) représente la consommation instantanée du moteur à l'instant n mesurée par les moyens de mesure de la consommation instantanée,
N_F(n) représente le niveau filtré à l'instant n, obtenu à partir de la relation précédente,
N_A(n) représente la quantité de carburant estimée à l'instant n,
N_A(n-1) représente la quantité de carburant estimée à l'instant n-1, et
K est une constante.

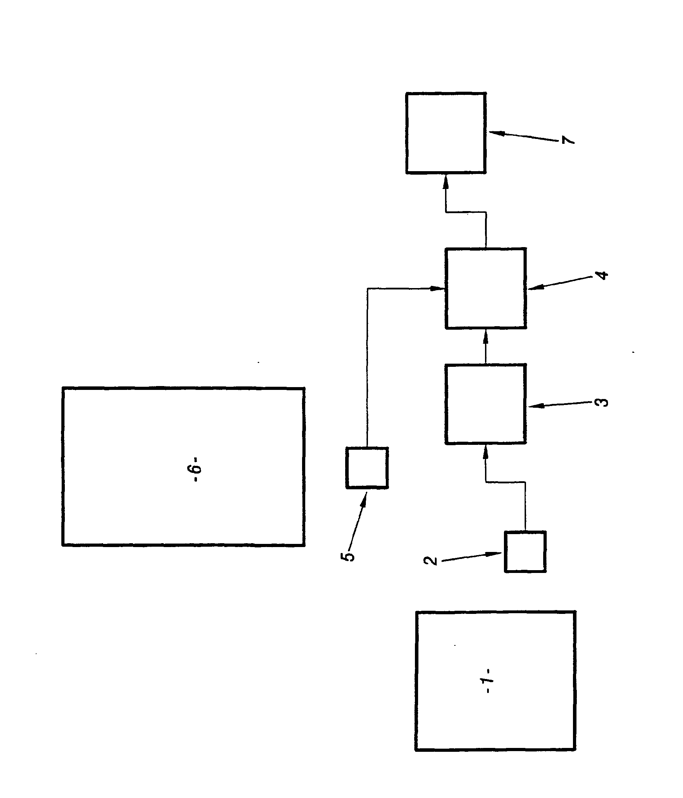

L'invention sera mieux comprise à la lecture de la description qui va suivre, donnée uniquement à titre d'exemple et faite en se référant au dessin annexé qui représente un schéma synoptique illustrant la structure et le fonctionnement d'un système d'estimation selon l'invention.

On a en effet représenté sur cette figure un système d'estimation de la quantité de carburant restant dans le réservoir d'un véhicule automobile.

Sur cette figure, le réservoir est désigné par la référence générale 1 et est associé à une jauge de carburant 2 adaptée pour délivrer des informations brutes de niveau de carburant et à des moyens de filtrage 3 de celles-ci.

De façon classique, la jauge de carburant peut par exemple être une jauge de type ohmique ou autre.

Les moyens de filtrage désignés par la référence générale 3 sont adaptés pour filtrer de manière itérative les informations brutes de niveau, en sortie de cette jauge, selon la relation :

$$N\_F(n) = \frac{(K1-1)}{K1} \times N\_F(n-1) + \frac{1}{K1} \times N\_B(n)$$

où :

N_F(n) représente le niveau filtré à l'instant n,
N_F(n-1) représente le niveau filtré à l'instant n-1,
N_B(n) représente le niveau mesuré en sortie de la jauge, et
K1 est une constante.

La sortie de ces moyens de filtrage est ensuite appliquée à des moyens d'estimation itérative de la quantité de carburant.

Ces moyens sont désignés par la référence générale 4 sur cette figure et sont également reliés à la sortie de moyens de mesure de la consommation instantanée en carburant du moteur du véhicule, ces moyens étant désignés par la référence générale 5 et le moteur désigné par la référence générale 6.

Ces moyens d'estimation 4 sont alors adaptés pour estimer la quantité de carburant restant dans le réservoir, selon la relation :

$$N\_A(n) = N\_A(n-1) - K \times Co(n) \times \frac{N\_A(n-1)}{[1/2 + N\_F(n)]}$$

où :

Co(n) représente la consommation du moteur à l'instant n,
N_F(n) représente le niveau filtré à l'instant n, obtenu à partir de la relation précédente,
N_A(n) représente la quantité de carburant estimée à l'instant n,
N_A(n-1) représente la quantité de carburant estimée à l'instant n-1, et
K est une constante, qui peut prendre des valeurs différentes selon que N_F(n-1) est ≥ ou < à N_A(n-1).

La sortie des moyens d'estimation 4 est reliée à des moyens 7 d'affichage de l'information correspondante, de type classique.

La détection d'un apport en carburant est réalisée de façon classique en utilisant le capteur de présence du bouchon d'obturation du réservoir.

On conçoit alors qu'une telle structure présente un certain nombre d'avantages par rapport aux systèmes de l'état de la technique, dans la mesure où la quantité affichée ne peut pas augmenter pendant le roulage du véhicule.

De plus, cette quantité ne peut pas descendre en-dessous d'une valeur proche de zéro et lors d'un apport en carburant, la quantité affichée suit relativement rapidement le remplissage du réservoir.

Cependant, lors du roulage, la quantité affichée ne suit pas les mouvements du réservoir et le témoin d'alerte de niveau bas de carburant dans le réservoir ne peut pas s'allumer puis s'éteindre dans la mesure où son état est stable et ne peut pas être déclenché par les mouvements du réservoir.

**Revendications**

1. Système d'estimation de la quantité de carburant restant dans le réservoir d'un véhicule automobile, du type comportant une jauge de carburant (2) adaptée pour délivrer des informations brutes de niveau de carburant, des moyens (3) de filtrage de celles-ci, et des moyens (5) de mesure de la consommation instantanée (Co(n)) en carburant du moteur (6) du véhicule, **caractérisé en ce que** les moyens de filtrage (3) sont adaptés pour filtrer de manière itérative les informations brutes de niveau selon la relation :

$$N\_F(n) = \frac{(K1-1)}{K1} \times N\_F(n-1) + \frac{1}{K1} \times N\_B(n)$$

où:

  N_F(n) représente le niveau de carburant filtré à l'instant n,
  N_F(n-1) représente le niveau de carburant filtré à l'instant n-1,
  N_B(n) représente le niveau mesuré par la jauge, et
  K1 est une constante,

et **en ce qu'**il comporte des moyens (4) adaptés pour l'estimation de manière itérative de la quantité de carburant, selon la relation :

$$N\_A(n) = N\_A(n-1) - K \times Co(n) \times \frac{N\_A(n-1)}{[1/2 + N\_F(n)]}$$

où:

  Co(n) représente la consommation instantanée du moteur à l'instant n mesurée par les moyens (5) de mesure de la consommation instantanée,
  N_F(n) représente le niveau de carburant filtré à l'instant n, obtenu à partir de la relation précédente,
  N_A(n) représente la quantité de carburant estimée à l'instant n,
  N_A(n-1) représente la quantité de carburant estimée à l'instant n-1, et
  K est une constante.

2. Système selon la revendication 1, **caractérisé en ce que** les moyens (4) adaptés pour l'estimation de manière itérative de la quantité de carburant sont adaptés pour utiliser des valeurs de K différentes selon que N_F(n-1) est ≥ ou < à N_A(n-1).

**Claims**

1. System for estimating the quantity of fuel remaining in the tank of an automobile, of the type comprising a fuel gauge (2) suited to deliver crude information of the fuel level, means (3) for filtering this, and means (5) for measuring the instantaneous consumption (Co(n)) of fuel of the vehicle engine (6), **characterized in that** the filtering means (3) are suited to filter in an iterative manner the crude information of the level according to the relationship:

$$N\_F(n) = \frac{(K1-1)}{K1} x N\_F(n-1) \frac{1}{K1} x N\_B(n)$$

in which:

N_F(n) represents the level of filtered fuel at the instant n,
N_F(n-1) represents the level of filtered fuel at the instant n-1,
N_B(n) represents the level measured by the gauge, and
K1 is a constant,

and **in that** it comprises means (4) suited for the estimation in an iterative manner of the quantity of fuel, according to the relationship:

$$N\_A(n) = N\_A(n-1) - KxCo(n)x\frac{N\_A(n-1)}{[1/2 + N\_F(n)]}$$

in which:

Co(n) represents the instantaneous consumption of the engine at the instant n, measured by the means (5) for measurement of the instantaneous consumption,
N_F(n) represents the level of filtered fuel at the instant n, obtained from the preceding relationship,
N_A(n) represents the estimated quantity of fuel at the instant n,
N_A(n-1) represents the estimated quantity of fuel at the instant n-1, and
K is a constant.

2. System according to Claim 1, **characterized in that** the means (4) suited for the estimation in an iterative manner of the quantity of fuel are suited to use different values of K depending on whether N_F(n-1) is ≥ or < than N_A(n-1).

**Patentansprüche**

1. System zum Schätzen der Kraftstoffmenge, die in dem Tank eines Kraftfahrzeugs übrig ist, des Typs, der eine Benzinuhr (2) aufweist, die Kraftstoffstandrohdaten liefern kann, Mittel (3) zu deren Filtern sowie Mittel (5) zum Messen des Kraftstoff-Momentanverbrauchs (Co(n)) des Motors (6) des Fahrzeugs, **dadurch gekennzeichnet, dass** die Filtermittel (3) iterativ die Standniveaurohdaten gemäß der folgenden Gleichung filtern können:

$$N\_F(n) = \frac{(K1-1)}{K1} xN\_F(n-1)\frac{1}{K1} xN\_B(n)$$

wobei:

N_F(n) den im Augenblick n gefilterten Kraftstoffstand darstellt,
N_F(n-1) den im Augenblick n-1 gefilterten Kraftstoffstand darstellt,
N_B(n) den von der Benzinuhr gemessenen Stand darstellt, und
K1 eine Konstante ist,

und dass es Mittel (4) aufweist, die iterativ die Kraftstoffmenge gemäß der folgenden Gleichung schätzen können:

$$N\_A(n) = N\_A(n-1) - KxCo(n)x\frac{N\_A(n-1)}{[1/2 + N\_F(n)]}$$

wobei:

Co(n) den Momentanverbrauch des Motors in dem Augenblick n gemessen von den Momentanverbrauch-Messmitteln (5) darstellt,

N_F(n) den im Augenblick n gefilterten Kraftstoffstand darstellt, der ausgehend von der vorhergehenden Gleichung erzielt wird,

N_A(n) die im Augenblick n geschätzte Kraftstoffmenge darstellt

N_A(n-1) die im Augenblick n-1 geschätzte Kraftstoffmenge darstellt und K eine Konstante ist.

2. System nach Anspruch 1, **dadurch gekennzeichnet, dass** die Mittel (4), die iterativ die Kraftstoffmenge schätzen können, unterschiedliche Werte für K je nach dem verwenden können, ob N_F(n-1) ≥ oder < N_A(n-1) ist.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2124390 A
- DE 19720125